# EUROPEAN PATENT APPLICATION

(11) **EP 4 303 261 A1**
(43) Date of publication of application: **10.01.2024**
(21) Application number: 22763182.7
(22) Date of filing: 28.02.2022
(51) Int. Cl.: C08L 5/00, C09J 105/00, C09J 107/00, C09J 201/00, C09J 7/20, C09J 7/38

(54) **ADHESIVE SHEET**

(30) Priority: 01.03.2021 JP 2021031890; 14.06.2021 JP 2021098637
(71) Applicant: Nitto Denko Corporation, Ibaraki-shi Osaka 567-8680 (JP)
(72) Inventor: OGINO, Yoshiko, Ibaraki-shi, Osaka 567-8680 (JP); KUMADA, Tatsuya, Ibaraki-shi, Osaka 567-8680 (JP); HARA, Yusuke, Ibaraki-shi, Osaka 567-8680 (JP); NAITO, Tomonari, Ibaraki-shi, Osaka 567-8680 (JP)
(74) Representative: Müller-Boré & Partner Patentanwälte PartG mbB
(86) International application number: PCT/JP2022/008250
(87) International publication number: WO 2022/186126

(57) **Abstract**

A pressure-sensitive adhesive sheet includes a substrate and a pressure-sensitive adhesive layer in order toward one side in a thickness direction. The substrate contains a first β-1,3-glucan derivative obtained by introducing an acyl group into a β-1,3-glucan and at least one resin selected from the group consisting of a rosin-based resin, a terpene-based resin, and a petroleum-based resin. In the first β-1,3-glucan derivative, the acyl group is represented by R¹CO-. The R¹ is a hydrocarbon group having 1 or more and 5 or less carbon atoms.

## Description

### TECHNICAL FIELD

The present invention relates to a pressure-sensitive adhesive sheet.

### BACKGROUND ART

Conventionally, a film using polysaccharides as a raw material has been known from the viewpoint of reducing an environmental load.

Specifically, a film containing a β-1,3-glucan has been proposed (ref: for example, Patent Document 1 below). The β-1,3-glucan is polysaccharides produced by algae and fungi.

### Citation List

### Patent Document

Patent Document 1: Japanese Unexamined Patent Publication No. 2004-331837

### SUMMARY OF THE INVENTION

### PROBLEM TO BE SOLVED BY THE INVENTION

On the other hand, such a film may be used as a substrate of a pressure-sensitive adhesive sheet. In such a case, a pressure-sensitive adhesive layer is disposed on one surface in a thickness direction of the film.

However, the film of Patent Document 1 has low adhesion to the pressure-sensitive adhesive layer. Therefore, when the pressure-sensitive adhesive sheet is attempted to be peeled from an adherend, there is a problem that the pressure-sensitive adhesive layer is not peeled from the adherend, the film is peeled from the pressure-sensitive adhesive layer, and the pressure-sensitive adhesive layer remains on the adherend.

The present invention provides a pressure-sensitive adhesive sheet having excellent adhesion between a substrate and a pressure-sensitive adhesive layer.

### MEANS FOR SOLVING THE PROBLEM

The present invention [1] includes a pressure-sensitive adhesive sheet including a substrate and a pressure-sensitive adhesive layer in order toward one side in a thickness direction, wherein the substrate contains a first β-1,3-glucan derivative obtained by introducing an acyl group into a β-1,3-glucan and at least one resin selected from the group consisting of a rosin-based resin, a terpene-based resin, and a petroleum-based resin; and in the first β-1,3-glucan derivative, the acyl group is represented by R¹CO-, and the R¹ is a hydrocarbon group having 1 or more and 5 or less carbon atoms.

The present invention [2] includes the pressure-sensitive adhesive sheet described in claim 1, wherein the pressure-sensitive adhesive layer contains a biomass-derived component.

The present invention [3] includes the pressure-sensitive adhesive sheet described in the above-described [2], wherein the biomass-derived component contains a second β-1,3-glucan derivative obtained by introducing an acyl group into a β-1,3-glucan; and in the second β-1,3-glucan derivative, the acyl group is represented by R²CO-, and the R² is a hydrocarbon group having 7 or more and 15 or less carbon atoms.

The present invention [4] includes the pressure-sensitive adhesive sheet described in the above-described [2], wherein the biomass-derived component contains a natural rubber-based pressure-sensitive adhesive.

The present invention [5] includes the pressure-sensitive adhesive sheet described in any one of the above-described [1] to [4], wherein a content ratio of the resin with respect to 100 parts by mass of the first β-1,3-glucan derivative is 10 parts by mass or more and 300 parts by mass or less.

### EFFECT OF THE INVENTION

In the pressure-sensitive adhesive sheet of the present invention, the substrate contains a predetermined resin together with the first β-1,3-glucan derivative. Therefore, the pressure-sensitive adhesive sheet has excellent adhesion between the substrate and the pressure-sensitive adhesive layer.

### BRIEF DESCRIPTION OF THE DRAWINGS

FIG. 1 shows a schematic view for illustrating one embodiment of a pressure-sensitive adhesive sheet of the present invention.
FIGS. 2A and 2B show schematic views for illustrating one embodiment of a method for producing a pressure-sensitive adhesive sheet:

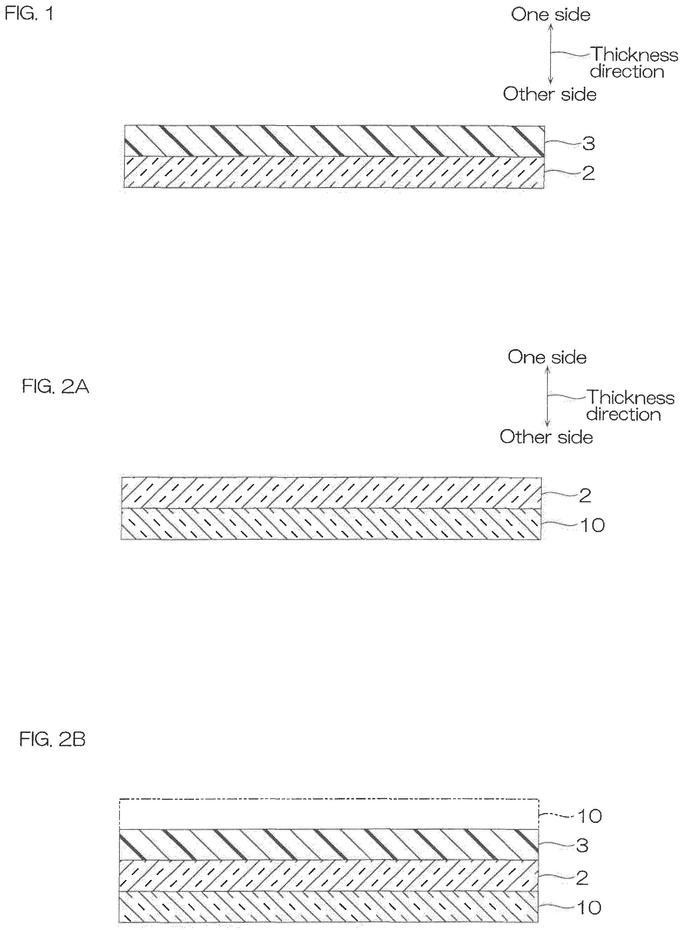

   FIG. 2A illustrating a first step of preparing a substrate and
   FIG. 2B illustrating a second step of disposing a pressure-sensitive adhesive layer on one surface in a thickness direction of the substrate.

### DESCRIPTION OF EMBODIMENTS

One embodiment of a pressure-sensitive adhesive sheet of the present invention is described with reference to FIG. 1.

In FIG. 1, an up-down direction on the plane of the sheet refers to an up-down direction (thickness direction); an upper side on the plane of the sheet refers to an upper side (one side in the thickness direction); and a lower side on the plane of the sheet is a lower side (other side in the thickness direction). Further, a right-left direction and a depth direction on the plane of the sheet refer to a plane direction perpendicular to the up-down direction. Specifically, the directions are in conformity with direction arrows in each view.

### <Pressure-Sensitive Adhesive Sheet>

As shown in FIG. 1, a pressure-sensitive adhesive sheet 1 has a film shape (including a sheet shape) having a predetermined thickness. The pressure-sensitive adhesive sheet 1 extends in the plane direction perpendicular to the thickness direction. The pressure-sensitive adhesive sheet 1 has a flat upper surface and a flat lower surface.

The pressure-sensitive adhesive sheet 1 includes a substrate 2 and a pressure-sensitive adhesive layer 3 in order toward one side in the thickness direction. Specifically, the pressure-sensitive adhesive sheet 1 includes the substrate 2 and the pressure-sensitive adhesive layer 3 which is directly disposed on the upper surface (one surface in the thickness direction) of the substrate 2.

A thickness of the pressure-sensitive adhesive sheet 1 is, for example, 500 µm or less, preferably 300 µm or less, and for example, 10 µm or more, preferably 50 µm or more.

### <Substrate>

The substrate 2 is a support for ensuring mechanical strength of the pressure-sensitive adhesive sheet 1.

The substrate 2 has a film shape. The substrate 2 is disposed on the entire lower surface of the pressure-sensitive adhesive layer 3 so as to be in contact with the lower surface of the pressure-sensitive adhesive layer 3.

The substrate 2 is formed from a film composition.

The film composition contains a first β-1,3-glucan derivative and a resin. In other words, the substrate 2 contains the first β-1,3-glucan derivative and the resin. Since the substrate 2 contains a predetermined resin together with the first β-1,3-glucan derivative, it has excellent adhesion between the substrate 2 and the pressure-sensitive adhesive layer 3 in the pressure-sensitive adhesive sheet 1.

### <First β-1,3-glucan Derivative>

The first β-1,3-glucan derivative is a base polymer (or a main polymer) in the substrate 2. The first β-1,3-glucan derivative is an acyl compound in which a part of a hydroxyl group in glucose contained in the β-1,3-glucan is acylated with an acyl group. In other words, the first β-1,3-glucan derivative is an acyl compound in which the acyl group is introduced into the β-1,3-glucan.

In the first β-1,3-glucan derivative, the acyl group is represented by R¹CO-. The R¹ is a hydrocarbon group having 1 or more and 5 or less carbon atoms.

Specifically, number of carbon atoms of the hydrocarbon group is 1 or more, preferably 2 or more, more preferably 3 or more, and 5 or less, preferably 4 or less.

When the number of carbon atoms of the hydrocarbon group is the above-described upper limit or less, it is possible to increase a tensile elastic modulus of the substrate 2, and the substrate 2 has toughness.

On the other hand, when the number of carbon atoms of the hydrocarbon group is above the above-described upper limit, the tensile elastic modulus of the substrate 2 is reduced, and the toughness of the substrate 2 is reduced.

Examples of the hydrocarbon group having 1 or more and 5 or less carbon atoms include an aliphatic hydrocarbon group having 1 or more and 5 or less carbon atoms and an alicyclic hydrocarbon group having 1 or more and 5 or less carbon atoms, and preferably, from the viewpoint of increasing the mechanical strength, an aliphatic hydrocarbon group having 1 or more and 5 or less carbon atoms is used.

Examples of the aliphatic hydrocarbon group having 1 or more and 5 or less carbon atoms include a saturated aliphatic hydrocarbon group having 1 or more and 5 or less carbon atoms and an unsaturated aliphatic hydrocarbon group having 1 or more and 5 or less carbon atoms.

An example of the saturated aliphatic hydrocarbon group having 1 or more and 5 or less carbon atoms includes an alkyl group having 1 or more and 5 or less carbon atoms. Examples of the alkyl group having 1 or more and 5 or less carbon atoms include a straight-chain alkyl group having 1 or more and 5 or less carbon atoms and a branched alkyl group having 1 or more and 5 or less carbon atoms. Examples of the straight-chain alkyl group having 1 or more and 5 or less carbon atoms include methyl, ethyl, propyl, butyl, sec-butyl, pentyl, and 3-pentyl. Examples of the branched alkyl group having 1 or more and 5 or less carbon atoms include iso-propyl, iso-butyl, tert-butyl, iso-pentyl, and neo-pentyl. As the alkyl group having 1 or more and 5 or less carbon atoms, preferably, a straight-chain alkyl group having 1 or more and 5 or less carbon atoms is used.

An example of the unsaturated aliphatic hydrocarbon group having 1 or more and 5 or less carbon atoms includes an alkenyl group having 1 or more and 5 or less carbon atoms. Examples of the alkenyl group having 1 or more and 5 or less carbon atoms include vinyl groups and 2-propenyl groups.

As the aliphatic hydrocarbon group having 1 or more and 5 or less carbon atoms, preferably, from the viewpoint of increasing the mechanical strength, a saturated aliphatic hydrocarbon group having 1 or more and 5 or less carbon atoms is used.

In the first β-1,3-glucan derivative, specific examples of the acyl group include acetyl (example of R¹ in R¹CO of CH₃), propionyl (example of R¹ in R¹CO of C₂H₅), butynyl (example of R¹ in R¹CO of C₃H₇), pentanoyl (example of R¹ in R¹CO of C₄H₉), and hexanoyl (example of R¹ in R¹CO of C₅H₁₁). Preferably, propionyl, butynyl, and hexanoyl are used, more preferably, butynyl is used.

An introduction amount (degree of substitution (may be referred to as DS)) of the acyl group in the first β-1,3-glucan derivative is, for example, 1.5 or more, preferably 2.0 or more, and below 3.0, preferably 2.9 or less. When the above-described degree of substitution is the above-described lower limit or more or the above-described upper limit or less, formability of the substrate 2 by thermal pressing is excellent.

The above-described degree of substitution is an average of the number of substitution (introduction) among the 3 hydroxyl groups in a β-1,3-glucan unit with the acyl group. Therefore, in theory, an upper limit of the degree of substitution of the acyl group in the first β-1,3-glucan derivative is 3.0.

In addition, the above-described degree of substitution is determined by ¹H-NMR. Measurement by the ¹H-NMR is described in, for example, Japanese Unexamined Patent Publication No. 2015-124183.

An example of a method for producing the first β-1,3-glucan derivative includes a method described in, for example, Japanese Unexamined Patent Publication No. 2018-154723.

Specifically, a part of the hydroxyl group in the glucose constituting the β-1,3-glucan is acylated with an acylating agent in the presence of a base.

Am example of the acylating agent includes a chloride of a fatty acid having 2 or more and 6 or less carbon atoms. In the fatty acid having 2 or more and 6 or less carbon atoms, the number of carbon atoms is the number of carbon atoms containing carbon of a carboxyl group.

Examples of the chloride of the fatty acid having 2 or more and 6 or less carbon atoms include acetyl chlorides, propionyl chlorides, butynyl chlorides, pentanoyl chlorides, and hexanoyl chlorides, and preferably, a propionyl chloride, a butynyl chloride, and a hexanoyl chloride are used, more preferably, a butynyl chloride is used.

These acylating agents may be used alone or in combination of two or more.

Examples of the base include pyridine, 4-dimethylaminopyridine, and triethylamine, and preferably, pyridine is used.

These bases may be used alone or in combination of two or more.

In the above-described reaction, by adjusting a mixing ratio of the acylating agent and the reaction conditions within a predetermined range, the above-described degree of substitution can be adjusted within the above-described range.

Specifically, the mixing ratio of the acylating agent with respect to 1 mol of the β-1,3-glucan is, for example, 3 mol or more, preferably 4 mol or more, more preferably 4.5 mol or more, and for example, 6 mol or less.

Further, as the reaction conditions, a reaction temperature is, for example, 50°C or more, preferably 60°C or more, and for example, 120°C or less, preferably 110°C or less. Further, the reaction time is, for example, 0.5 hours or more, and for example, 8 hours or less.

In addition, in the above-described reaction, a known solvent may be blended at an appropriate ratio.

Thus, the first β-1,3-glucan derivative is obtained.

In the film composition, a content ratio of the first β-1,3-glucan derivative is, for example, 30% by mass or more, preferably 40% by mass or more, more preferably 60% by mass or more, further more preferably 70% by mass or more, and for example, 95% by mass or less.

### [Resin]

The resin is a component which improves the adhesion between the substrate 2 and the pressure-sensitive adhesive layer 3, while ensuring shape retainability of the substrate 2.

The resin is at least one selected from the group consisting of a rosin-based resin, a terpene-based resin, and a petroleum-based resin. Each classification of the rosin-based resin, the terpene-based resin, and the petroleum-based resin may be also partially overlapped without being distinguished from each other. Specifically, the resin includes a resin which is classified as the terpene-based resin, while being classified as the rosin-based resin. Further, the resin includes a resin which is classified as the petroleum-based resin, while being classified as the rosin-based resin. Furthermore, the resin includes a resin which is classified as the petroleum-based resin, while being classified as the terpene-based resin.

### [Rosin-Based Resin]

Examples of the rosin-based resin include disproportionated rosin, rosin esters, phenol-modified rosin, hydrogenated rosin, polymerized rosin, maleated rosin, fumarated rosin, disproportionated maleic acid-modified rosin resins, and rosin metal salts. The rosin ester includes a pentaerythritol ester-modified rosin resin. The phenol-modified rosin may be referred to as a terpene phenol resin. As the rosin-based resin, preferably, a rosin ester and a rosin metal salt are used.

A softening point of the rosin-based resin by a ring and ball method is, for example, 110°C or more and for example, 170°C or less.

These rosin-based resins may be used alone or in combination of two or more.

### [Terpene-Based Resin]

Examples of the terpene-based resin include terpene resins, hydrides of terpene resins, aromatic modified terpene resins, phenol-modified terpene resins, and hydrides of phenol-modified terpene resins, and preferably, a phenol-modified terpene resin is used. The phenol-modified terpene resin may be also referred to as a terpene phenol resin.

The softening point of the terpene-based resin by the ring and ball method is, for example, 15°C or more, preferably 60°C or more, more preferably 100°C or more, and for example, 170°C or less, preferably 140°C or less.

These terpene-based resins may be used alone or in combination of two or more.

### [Petroleum-Based Resin]

Examples of the petroleum-based resin include aliphatic (C5) petroleum resins, aromatic (C9) petroleum resins, aliphatic/aromatic copolymerization (C5/C9) petroleum resins, hydrogenated products of these, modified products of these (for example, maleic anhydride modified product), coumarone resins, coumarone indene resins, and styrene-based tackifiers, and preferably, a hydrogenated product is used, more preferably, a hydrogenated product of an aromatic (C9) petroleum resin is used.

A hydrogenation ratio in the hydrogenated product is, for example, 50% or more, preferably 80% or more, and for example, 100% or less.

These petroleum-based resins may be used alone or in combination of two or more.

The rosin-based resin, the terpene-based resin, and the petroleum-based resin are identified by the ¹H-NMR spectrum, FT-IR spectrum, gel permeation chromatography, and/or mass spectrometry.

These resins may be used alone or in combination of two or more, and preferably, a rosin-based resin is used alone, a terpene-based resin is used alone, or a petroleum-based resin is used alone.

The content ratio of the resin with respect to 100 parts by mass of the first β-1,3-glucan derivative is, for example, 10 parts by mass or more, preferably 20 parts by mass or more, and for example, 300 parts by mass or less, preferably 250 parts by mass or less, more preferably 220 parts by mass or less, further more preferably 180 parts by mass or less, particularly preferably 150 parts by mass or less, most preferably 120 parts by mass or less, still more preferably 60 parts by mass or less.

When the content ratio of the resin is the above-described lower limit or more or the above-described upper limit or less, it is possible to further more improve the adhesion between the substrate 2 and the pressure-sensitive adhesive layer 3.

In the film composition, the content ratio of the resin is, for example, 5% by mass or more, and for example, 70% by mass or less, preferably 60% by mass or less, more preferably 40% by mass or less, further more preferably 30% by mass or less.

Further, the film composition may contain an additive at an appropriate ratio as long as it does not inhibit the effect of the present invention. Examples of the additive include other base polymers, other resins, leveling agents, plasticizers, fillers, stabilizers, preservatives, and antioxidants.

Then, in order to form the substrate 2, though the details are described later, a diluent of the film composition is coated onto one surface in the thickness direction of a release sheet 10 (described later), and the coated sheet is, if necessary, heated and dried. Thus, the substrate 2 is formed.

The substrate 2 has, for example, no tackiness (pressure-sensitive adhesiveness), and has high toughness.

Specifically, the tensile elastic modulus (Young's modulus) at 23°C of the film is, for example, 100 MPa or more, preferably 150 MPa or more, and for example, 1000 MPa or less.

When the above-described tensile elastic modulus is the above-described lower limit or more or the above-described upper limit or less, the substrate 2 has no tackiness (pressure-sensitive adhesiveness), and has the excellent shape retainability and the excellent mechanical strength.

The thickness of the substrate 2 is, for example, 1 µm or more, preferably 10 µm or more, more preferably 30 µm or more, and for example, 100 µm or less, preferably 70 µm or less.

### <Pressure-Sensitive Adhesive Layer>

The pressure-sensitive adhesive layer 3 has a film shape. The pressure-sensitive adhesive layer 3 is disposed on the entire upper surface of the substrate 2 so as to be in contact with the upper surface of the substrate 2.

The pressure-sensitive adhesive layer 3 is formed from a pressure-sensitive adhesive composition.

The pressure-sensitive adhesive composition is not particularly limited as long as it contains a component for imparting the tackiness to the pressure-sensitive adhesive layer 3.

The pressure-sensitive adhesive composition preferably contains a biomass-derived component (specifically, a biomass-derived component having the tackiness). In other words, the pressure-sensitive adhesive layer 3 preferably contains the biomass-derived component. When the pressure-sensitive adhesive layer 3 contains the biomass-derived component, it is possible to reduce an environmental load.

The biomass-derived component is a component having a biomass degree (ASTM D6866) of, for example, 7% or more, preferably 10% or more, and for example, 100% or less.

The biomass-derived component preferably contains a second β-1,3-glucan derivative and/or a natural rubber-based pressure-sensitive adhesive.

### [Second β-1,3-glucan Derivative]

The second β-1,3-glucan derivative is an acyl compound in which a part of the hydroxyl group in the glucose contained in the β-1,3-glucan is acylated with the acyl group. In other words, the second β-1,3-glucan derivative is an acyl compound obtained by introducing the acyl group into the β-1,3-glucan.

In the second β-1,3-glucan derivative, the acyl group is represented by R²CO-. The R² is a hydrocarbon group having 7 or more and 15 or less hydrocarbon atoms.

Specifically, the number of carbon atoms of the hydrocarbon group is 7 or more, preferably 10 or more, more preferably 12 or more, and 15 or less, preferably 14 or less.

When the number of carbon atoms of the hydrocarbon group is the above-described lower limit or more or the above-described upper limit or less, pressure-sensitive adhesive strength is improved.

Further, the number of carbon atoms of R² (hydrocarbon group) in the acyl group (R²CO-) of the second β-1,3-glucan derivative is larger than the number of carbon atoms of R¹ (hydrocarbon group) in the acyl group (R¹CO-) in the first β-1,3-glucan derivative. This distinguishes the second β-1,3-glucan derivative from the first β-1,3-glucan derivative.

Examples of the hydrocarbon group having 7 or more and 15 or less carbon atoms include an aliphatic hydrocarbon group having 7 or more and 15 or less carbon atoms and an alicyclic hydrocarbon group having 7 or more and 15 or less carbon atoms, and preferably, an aliphatic hydrocarbon group having 7 or more and 15 or less carbon atoms is used.

Examples of the aliphatic hydrocarbon group having 7 or more and 15 or less carbon atoms include a saturated aliphatic hydrocarbon group having 7 or more and 15 or less carbon atoms and an unsaturated aliphatic hydrocarbon group having 7 or more and 15 or less carbon atoms.

An example of the saturated aliphatic hydrocarbon group having 7 or more and 15 or less carbon atoms includes an alkyl group having 7 or more and 15 or less carbon atoms. Examples of the alkyl group having 7 or more and 15 or less carbon atoms include a straight-chain alkyl group having 7 or more and 15 or less carbon atoms and a branched alkyl group having 7 or more and 15 or less carbon atoms. Examples of the straight-chain alkyl group having 7 or more and 15 or less carbon atoms include heptyl, octyl, nonyl, decyl, undecyl, dodecyl, tridecyl, tetradecyl, and pentadecyl. An example of the branched alkyl group having 7 or more and 15 or less carbon atoms includes ethyl octyl.

An example of the unsaturated aliphatic hydrocarbon group having 7 or more and 15 or less carbon atoms includes an alkenyl group having 7 or more and 15 or less carbon atoms.

As the aliphatic hydrocarbon group having 7 or more and 15 or less carbon atoms, preferably, a saturated aliphatic hydrocarbon group having 7 or more and 15 or less carbon atoms is used.

In the second β-1,3-glucan derivative, specific examples of the acyl group include octanoyl (example of R² in R²CO of C₇H₁₅), nonanoyl (example of R² in R²CO of C₈H₁₇), decanoyl (example of R² in R²CO of C₉H₁₉), lauroyl (that is, dodecanoyl) (example of R² in R²CO of C₁₁H₂₃), myristoyl (that is, tetradecanoyl) (example of R² in R²CO of C₁₃H₂₇), and palmitoyl (that is, hexadecanoyl) (example of R² in R²CO of C₁₅H₃₁). Preferably, ocanoyl, myristoyl, and palmitoyl are used.

The introduction amount of the acyl group in the second β-1,3-glucan derivative is the same as the introduction amount of the acyl group in the first β-1,3-glucan derivative.

The method for producing the second β-1,3-glucan derivative is the same as the method for producing the first β-1,3-glucan derivative. However, in the method for producing the second β-1,3-glucan derivative, a chloride of a fatty acid having 8 or more and 16 or less carbon atoms is used as an acylating agent.

Examples of the fatty acid having 8 or more and 16 or less carbon atoms include octanoyl chlorides, nonanoyl chlorides, decanoyl chlorides, lauroyl chlorides, myristoyl chlorides, and palmitoyl chlorides, and preferably, an octanoyl chloride, a myristoyl chloride, and a palmitoyl chloride are used. In the fatty acid having 8 or more and 16 or less carbon atoms, the number of carbon atoms is the number of carbon atoms containing carbon of a carboxyl group.

Thus, the second β-1,3-glucan derivative is obtained.

### [Natural Rubber-Based Pressure-Sensitive Adhesive]

The natural rubber-based pressure-sensitive adhesive includes, for example, natural rubber (crepe rubber) and a tackifier.

Examples of the tackifier include the above-described rosin-based resin, the above-described terpene-based resin, and the above-described petroleum-based resin, and preferably, a terpene-based resin is used.

The mixing ratio of the tackifier with respect to 100 parts by mass of the natural rubber is, for example, 20 parts by mass or more, preferably 40 parts by mass or more, and for example, 70 parts by mass or less.

The natural rubber-based pressure-sensitive adhesive can be also diluted with, for example, an organic solvent (for example, toluene, normanhexane).

Further, examples of the pressure-sensitive adhesive composition may also include, in addition to the above-described second β-1,3-glucan derivatives and the above-described natural rubber-based pressure-sensitive adhesives, pressure-sensitive adhesives such as polyester-based pressure-sensitive adhesives, silicone-based pressure-sensitive adhesives, acrylic pressure-sensitive adhesives, urethane-based pressure-sensitive adhesives, polyamide-based pressure-sensitive adhesives, epoxy-based pressure-sensitive adhesives, vinyl alkyl ether-based pressure-sensitive adhesives, and fluorine-based pressure-sensitive adhesives.

As the pressure-sensitive adhesive, preferably, a polyester-based pressure-sensitive adhesive, a silicone-based pressure-sensitive adhesive, and an acrylic pressure-sensitive adhesive are used.

The polyester-based pressure-sensitive adhesive is a pressure-sensitive adhesive containing a polyester as a main component, and can be obtained by a known method.

The silicone-based pressure-sensitive adhesive is a pressure-sensitive adhesive containing a cross-linking product of an organopolysiloxane, and can be obtained by a known method.

The acrylic pressure-sensitive adhesive is, for example, a pressure-sensitive adhesive containing a cross-linking product of an alkyl (meth)acrylate, and can be obtained by a known method.

Among the above-described pressure-sensitive adhesives, the pressure-sensitive adhesive formulated with a biomass raw material component and satisfying the above-described biomass degree is classified into a biomass-derived component, and the pressure-sensitive adhesive not satisfying the above-described biomass degree is classified into a component (another component) other than the biomass-derived component.

In the pressure-sensitive adhesive composition, the content ratio of the biomass-derived component is, for example, 60% by mass or more, preferably 70% by mass or more, and for example, 100% by mass.

The pressure-sensitive adhesive composition preferably contains the biomass-derived component, or more preferably, from the viewpoint of reducing the environmental load, does not contain the other component and contains the biomass-derived component.

The pressure-sensitive adhesive composition may contain the additive at the appropriate ratio as long as it does not inhibit the effect of the present invention. Examples of the additive include leveling agents, plasticizers, fillers, stabilizers, preservatives, and antioxidants.

Then, in order to form the pressure-sensitive adhesive layer 3, though the details are described later, the diluent of the pressure-sensitive adhesive composition is coated onto one surface in the thickness direction of the substrate 2, and if necessary, heated and dried. Thus, the pressure-sensitive adhesive layer 3 is formed.

The thickness of the pressure-sensitive adhesive layer 3 is, for example, 1 µm or more, preferably 10 µm or more, more preferably 30 µm or more, and for example, 100 µm or less, preferably 70 µm or less.

### <Method for Producing Pressure-Sensitive Adhesive Sheet>

One embodiment of a method for producing the pressure-sensitive adhesive sheet 1 is described with reference to FIGS. 2A and 2B.

The method for producing the pressure-sensitive adhesive sheet 1 includes a first step of preparing the substrate 2 and a second step of disposing the pressure-sensitive adhesive layer 3 on one surface in the thickness direction of the substrate 2.

### [First Step]

In the first step, as shown in FIG. 2A, the substrate 2 is prepared.

To prepare the substrate 2, first, the film composition is prepared.

To prepare the film composition, the first β-1,3-glucan derivative, the resin, and if necessary, the additive to be blended are mixed.

Further, the film composition may be also diluted with a known solvent if necessary.

When the film composition is diluted with the solvent, the solid content concentration of the diluent of the film composition is, for example, 3% by mass or more, preferably 5% by mass or more, and for example, 50% by mass or less, preferably 15% by mass or less, more preferably 8% by mass or less.

In addition, in mixing of the first β-1,3-glucan derivative with the resin, a diluent obtained by dissolving the first β-1,3-glucan derivative with a known solvent and/or a diluent obtained by dissolving the resin with a known solvent can be mixed, thereby preparing a diluent of the film composition.

Next, the diluent of the film composition is coated onto one surface in the thickness direction of the release sheet 10, and if necessary, heated and dried.

Examples of the release sheet 10 include polyester sheets (polyethylene terephthalate (PET) sheet etc.), polyolefin sheets (polyethylene sheet, polypropylene sheet, etc.), polyvinyl chloride sheets, polyimide sheets, and polyamide sheets (nylon sheet).

The thickness of the release sheet 10 is, for example, 1 µm or more, and for example, 100 µm or less.

A heating temperature is, for example, 40°C or more, and for example, 120°C or less. Further, the heating time is, for example, 1 minute or more, and for example, 60 minutes or less.

Thus, the substrate 2 is prepared (formed).

### [Second Step]

In the second step, as shown in FIG. 2B, the pressure-sensitive adhesive layer 3 is disposed on one surface in the thickness direction of the substrate 2.

In order to dispose the pressure-sensitive adhesive layer 3, first, the pressure-sensitive adhesive composition is prepared.

To prepare the pressure-sensitive adhesive composition, a biomass-derived component and/or another component, and if necessary, an additive to be blended are mixed.

Further, the pressure-sensitive adhesive composition may be also diluted with a known solvent if necessary.

When the pressure-sensitive adhesive composition is diluted with the solvent, the solid content concentration of the diluent of the pressure-sensitive adhesive composition is, for example, 5% by mass or more, and for example, 70% by mass or less, preferably 50% by mass or less, more preferably 30% by mass or less.

Next, the diluent of the pressure-sensitive adhesive composition is coated onto one surface in the thickness direction of the substrate 2, and heated and dried.

The heating temperature is, for example, 40°C or more, and for example, 120°C or less. Further, the heating time is, for example, 1 minute or more, and for example, 60 minutes or less. In addition, when the pressure-sensitive adhesive composition contains the acrylic pressure-sensitive adhesive and/or the polyester-based pressure-sensitive adhesive, thereafter, in order to completely proceed a reaction of a cross-linking agent, it is aged at, for example, 30°C or more, and for example, 60°C or less, preferably 50°C or less, for, for example, 1 day or more, and for example, 7 days or less, preferably 5 days or less.

Thus, the pressure-sensitive adhesive layer 3 is disposed (formed) on one surface in the thickness direction of the substrate 2, and it is possible to obtain the pressure-sensitive adhesive sheet 1 including the release sheet 10, the substrate 2, and the pressure-sensitive adhesive layer 3 in order toward one side in the thickness direction. Further in the pressure-sensitive adhesive sheet 1, it is also possible to peel the release sheet 10 if necessary.

### <Function and Effect>

The pressure-sensitive adhesive sheet 1 includes the substrate 2 and the pressure-sensitive adhesive layer 3 in order toward one side in the thickness direction. Then, the substrate 2 contains a predetermined resin together with the first β-1,3-glucan derivative. When the substrate 2 contains the predetermined resin, the adhesion between the substrate 2 and the pressure-sensitive adhesive layer 3 is improved from the viewpoint of preventing anchoring breakage, while the shape retainability of the substrate 2 can be improved.

Further, as described above, the pressure-sensitive adhesive composition contained in the pressure-sensitive adhesive layer 3 is not particularly limited as long as it is a component for imparting the tackiness to the pressure-sensitive adhesive layer 3. In other words, in the pressure-sensitive adhesive sheet 1, as long as the substrate 2 contains the above-described resin, it is possible to improve the adhesion between the substrate 2 and the pressure-sensitive adhesive layer 3 regardless of the kind of the pressure-sensitive adhesive layer 3. In particular, when the pressure-sensitive adhesive composition does not contain the other component and contains the biomass-derived component, it is possible to reduce the environmental load.

### <Modified Examples>

In each modified example, the same reference numerals are provided for members and steps corresponding to each of those in one embodiment, and their detailed description is omitted. Further, each modified example can achieve the same function and effect as that of one embodiment unless otherwise specified. Furthermore, one embodiment and each modified example can be appropriately used in combination.

In the above-described description, the pressure-sensitive adhesive layer 3 is formed from the pressure-sensitive adhesive composition. On the other hand, a commercially available pressure-sensitive adhesive tape can be used as it is as the pressure-sensitive adhesive layer 3.

In the above-described description, in the second step, the pressure-sensitive adhesive composition is coated onto one surface in the thickness direction of the substrate 2, thereby disposing (forming) the pressure-sensitive adhesive layer 3 on one surface in the thickness direction of the substrate 2. On the other hand, it is also possible to dispose the pressure-sensitive adhesive layer 3 on one surface in the thickness direction of the substrate 2 by coating the pressure-sensitive adhesive composition onto one surface in the thickness direction of the release sheet 10 to form the pressure-sensitive adhesive layer 3, and then, transferring the pressure-sensitive adhesive layer 3 onto one surface in the thickness direction of the substrate 2.

In the above-described description, the pressure-sensitive adhesive layer 3 is disposed (formed) on one surface in the thickness direction of the substrate 2. On the other hand, it is also possible to dispose (form) the pressure-sensitive adhesive layer 3 on the other surface in the thickness direction of the substrate 2. In other words, it is also possible to dispose (form) the pressure-sensitive adhesive layer 3 on both surfaces of the substrate 2 (one surface in the thickness direction and the other surface in the thickness direction).

In addition, in the second step, after the pressure-sensitive adhesive layer 3 is disposed (formed) on one surface in the thickness direction of the substrate 2, it is also possible to dispose the release sheet 10 (virtual line of FIG. 2B) on one surface in the thickness direction of the pressure-sensitive adhesive layer 3.

### Examples

Next, the present invention is further described based on Synthesis Examples, Examples, and Comparative Examples. The present invention is however not limited by these Synthesis Examples, Examples, and Comparative Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". Further, all designations of "part" or "parts" and "%" mean part or parts by weight and % by weight, respectively, unless otherwise particularly specified in the following description.

### 1. Details of Components

PENSEL D-125: rosin-based resin, softening point of 120 to 130°C by a ring and ball method, manufactured by Arakawa Chemical Industries, Ltd.
PINECRYSTAL KR-50M: rosin metal salt-based resin, softening point of 145 to 160°C by a ring and ball method, manufactured by Arakawa Chemical Industries, Ltd.
YS POLYSTER T-130: terpene-based resin, softening point of 125 to 135°C by a ring and ball method, manufactured by YASUHARA CHEMICAL CO., LTD.
ARKON P-125: petroleum-based resin, hydrogenated product (hydrogenation ratio of 90 to 100%) of aromatic (C9) petroleum resin, manufactured by Arakawa Chemical Industries, Ltd.

### 2. Synthesis of First β-1,3-glucan Derivative

### Synthesis Example 1 (Butyrylated β-1,3-glucan, DS of 2.8, Number of Carbon Atoms of R¹ in R¹CO of 3)

A reaction vessel equipped with a cooling tube, a nitrogen introduction tube, a thermometer, and a stirrer was charged with 6 g of β-1,3-glucan (manufactured by Euglena Co., Ltd., glucose portion of 37.04 mmol) and 500 mL of dehydrated pyridine (manufactured by FUJIFILM Wako Pure Chemical Corporation), and the obtained mixture was stirred for 0.5 hours under a nitrogen atmosphere at a temperature of 92°C. A butyryl chloride (19.7 mL) (185.0 mmol, manufactured by FUJIFILM Wako Pure Chemical Corporation) was added to a pyridine solution, and then, the obtained mixture was heated at 92°C to be stirred for 1 hour. Thus, a reaction liquid mixture was prepared.

Thereafter, an intermediate of a solid matter was obtained from the reaction liquid mixture. First, 800 mL of water was added to the reaction liquid mixture after one hour of the start of the reaction, and the resulting liquid was cooled to a room temperature. Next, the resulting solid matter was taken out, and the taken solid matter was dissolved in 500 mL of ethyl acetate, thereby preparing an ethyl acetate solution. The ethyl acetate solution was poured into 1000 mL of methanol during stirring, and further, 1000 mL of water was poured thereto, thereby obtaining the solid matter. An operation in which the solid matter was dissolved in the ethyl acetate to be poured into the methanol, and the water was added to the resulting liquid was repeated twice. As a result, the resulting liquid was cleansed, thereby obtaining a solid matter. The solid matter was dried under a reduced pressure at 60°C for 4 hours. Thus, a butyrylated β-1,3-glucan was obtained. In other words, the butyrylated β-1,3-glucan was the first β-1,3-glucan derivative obtained by introducing a butyryl into the β-1,3-glucan.

### Synthesis Example 2 (Propionylated β-1,3-glucan, DS of 2.8, Number of Carbon Atoms of R¹ in R¹CO of 2)

A first β-1,3-glucan derivative was obtained in the same manner as in Synthesis Example 1. However, the butyryl chloride was changed to 16.17 mL of propionyl chloride (185.0 mmol, manufactured by FUJIFILM Wako Pure Chemical Corporation).

### Synthesis Example 3 (Hexanoylated β-1,3-glucan, DS of 2.8, Number of Carbon Atoms of R¹ in R¹CO of 5)

A first β-1,3-glucan derivative was obtained in the same manner as in Synthesis Example 1. However, the butyryl chloride was changed to 25.86 mL of hexanoyl chloride (185.0 mmol, manufactured by FUJIFILM Wako Pure Chemical Corporation). In addition, the solid matter was dissolved in 300 mL of toluene to be poured into 1000 mL of methanol at the time of reprecipitation.

### 3. Synthesis of Second β-1,3-glucan Derivative

Synthesis Example 4 (myristoylated β-1,3-glucan, DS of 2.8, Number of Carbon Atoms of R² in R²CO of 13)

A second β-1,3-glucan derivative was obtained in the same manner as in Synthesis Example 1. However, the butyryl chloride was changed to 47.39 mL of myristoyl chloride (185.0 mmol, manufactured by FUJIFILM Wako Pure Chemical Corporation).

### Synthesis Example 5 (Octanoylated β-1,3-glucan, DS of 2.8, Number of Carbon Atoms of R² in R²CO of 7)

A second β-1,3-glucan derivative was obtained in the same manner as in Synthesis Example 1. However, the butyryl chloride was changed to 31.57 mL of octanoyl chloride (185.0 mmol, manufactured by FUJIFILM Wako Pure Chemical Corporation).

### Synthesis Example 6 (Palmitoylated β-1,3-glucan, DS of 2.8, Number of Carbon Atoms of R² in R²CO of 15)

A second β-1,3-glucan derivative was obtained in the same manner as in Synthesis Example 1. However, the butyryl chloride was changed to 56.10 mL of palmitoyl chloride (185.0 mmol, manufactured by FUJIFILM Wako Pure Chemical Corporation).

### 4. Preparation of Natural Rubber-Based Pressure-Sensitive Adhesive

### Preparation Example 1

A crepe rubber (dried product) was dissolved in toluene, thereby preparing a toluene solution of the crepe rubber (solid content concentration of 10% by mass).

Separately, YS resin PX1250 (terpene-based resin, manufactured by YASUHARA CHEMICAL CO., LTD.) was dissolved in the toluene, thereby preparing the toluene solution of YS resin PX1250 (solid content concentration of 30% by mass).

The toluene solution of the crepe rubber and the toluene solution of YS resin PX1250 were mixed so that the ratio of YS resin PX1250 with respect to 100 parts by mass of the crepe rubber was 30 parts by mass. Thus, a natural rubber-based pressure-sensitive adhesive was prepared.

### 5. Preparation of Polyester-Based Pressure-Sensitive Adhesive

### Preparation Example 2

Nichigo-POLYESTER NP-110S50EO (polyester) was dissolved in ethyl acetate, thereby preparing an ethyl acetate solution of Nichigo-POLYESTER NP-110S50EO (solid content concentration of 50% by mass).

Separately, Coronate L (trimethylolpropane adduct of tolylene diisocyanate, manufactured by TOSOH CORPORATION) was dissolved in the ethyl acetate, thereby preparing an ethyl acetate solution of Coronate L (solid content concentration of 50% by mass).

The ethyl acetate solution of Nichigo-POLYESTER-NP-110S50EO and the ethyl acetate solution of Coronate L were mixed so that the ratio of Coronate L with respect to 100 parts by mass of Nichigo-POLYESTER-NP-110S50EO was 3 parts by mass. Thus, a polyester-based pressure-sensitive adhesive was prepared.

### 6. Preparation of Acrylic Pressure-Sensitive Adhesive

### Preparation Example 3

A reaction vessel equipped with a cooling tube, a nitrogen introduction tube, a thermometer, and a stirrer was charged with 98 parts by mass of lauryl acrylate (manufactured by Tokyo Chemical Industry Co., Ltd.), 2 parts by mass of 4-hydroxybutyl acrylate (manufactured by Tokyo Chemical Industry Co., Ltd.), 150 parts by mass of ethyl acetate (manufactured by FUJIFILM Wako Pure Chemical Corporation), and 0.1 parts by mass of azobisisobutyronitrile (manufactured by Tokyo Chemical Industry Co., Ltd.), and nitrogen substitution was carried out for 1 hour. Thereafter, the resulting product was reacted at 60°C for 6 hours, thereby obtaining an ethyl acetate solution of a polyacrylic ester.

Separately, Coronate L was dissolved in the ethyl acetate, thereby preparing an ethyl acetate solution of Coronate L (solid content concentration of 7.5% by mass).

The ethyl acetate solution of the polyacrylic ester and the ethyl acetate solution of Coronate L were mixed so that the ratio of Coronate L with respect to 100 parts by mass of the polyacrylic ester was 1 part by mass. Thus, an acrylic pressure-sensitive adhesive was prepared.

### 7. Production of Pressure-Sensitive Adhesive Sheet

### Example 1

### <First Step>

The first β-1,3-glucan derivative of Synthesis Example 1 (dried product) was dissolved in toluene, thereby preparing a toluene solution of the first β-1,3-glucan derivative (solid content concentration of 5% by mass).

Separately, PENSEL D-125 was dissolved in the toluene, thereby preparing a toluene solution of PENSEL D-125 (solid content concentration of 50% by mass).

Thereafter, the toluene solution of the first β-1,3-glucan derivative and the toluene solution of PENSEL D-125 were blended and mixed. At this time, the number of parts by mass of PENSEL D-125 with respect to 100 parts by mass of the first β-1,3-glucan derivative was set at 30 parts by mass. Thus, a dilution of the film composition was obtained.

Then, the diluent of the film composition was coated onto one surface (release treatment surface) in the thickness direction of the release sheet made of DIAFOIL MRF25 (polyethylene terephthalate, thickness of 25 µm, manufactured by Mitsubishi Chemical Corporation) using an applicator (manufactured by TESTER SANGYO CO., LTD.), thereby obtaining a coating film. Thereafter, the coating film was heated at 60°C for 5 minutes and then, at 100°C for 5 minutes to be dried. Thus, a substrate (thickness of 50 µm) was disposed on one surface in the thickness direction of the release sheet.

### <Second Step>

The second β-1,3-glucan derivative of Synthesis Example 4 (dried product) was dissolved in the toluene, thereby obtaining a diluent of the pressure-sensitive adhesive composition (solid content concentration of 10% by mass).

Next, the diluent of the pressure-sensitive adhesive composition was coated onto one surface in the thickness direction of a sheet (no release treatment) made of a backing substrate for adhesion evaluation of the pressure-sensitive adhesive composition (Lumirror S10 (polyethylene terephthalate, thickness of 25 µm, manufactured by Toray Industries, Inc.) using an applicator (manufactured by TESTER SANGYO CO., LTD.), thereby obtaining a coating film. Thereafter, the coating film was heated at 60°C for 5 minutes and then, at 100°C for 5 minutes to be dried. Thus, a pressure-sensitive adhesive layer (thickness of 50 µm) was obtained, and a pressure-sensitive adhesive sheet was produced. Thereafter, a release sheet (DIAFOII, MRF25, polyethylene terephthalate, thickness of 25 µm, manufactured by Mitsubishi Chemical Corporation) was attached onto one surface in the thickness direction of the pressure-sensitive adhesive layer using a rubber roller. Thereafter, the obtained sheet was cut into a width of 20 mm and a length of 80 mm to be compressively bonded at 100°C for 1 min at 0.5 MPa.

### Examples 2 to 70 and Comparative Examples 1 to 13

A pressure-sensitive adhesive sheet was produced based on the same manner as in Example 1. Further, a mixing formulation was changed in accordance with Tables 1 to 13.

In addition, in Examples 18 to 21 and Comparative Example 5 in which the pressure-sensitive adhesive composition contained the polyester-based pressure-sensitive adhesive of Preparation Example 2, in the second step, the pressure-sensitive adhesive composition was coated onto one surface in the thickness direction of the substrate, thereby obtaining a coating film. Thereafter, the coating film was dried by heating at 60°C for 10 minutes, and then, aged at 50°C for 7 days.

In addition, in Examples 22 to 24 and Comparative Example 6, in the second step, a silicone-based pressure-sensitive adhesive tape No. 360UL (manufactured by NITTO DENKO CORPORATION) was used as it is as a pressure-sensitive adhesive layer.

In addition, in Examples 25 to 28 and Comparative Example 7 in which the pressure-sensitive adhesive composition contained the acrylic pressure-sensitive adhesive of Preparation Example 3, in the second step, the pressure-sensitive adhesive composition was coated onto one surface in the thickness direction of the substrate, thereby obtaining a coating film. Thereafter, the coating film was dried by heating at 60°C for 10 minutes, then, at 100°C for 5 minutes, and thereafter, aged at 50°C for 7 days.

### 8. Evaluation

### <Adhesion Evaluation>

In adhesion evaluation, a substrate was disposed on one surface in the thickness direction of a release sheet made of DIAFOIL MRF25 (polyethylene terephthalate, thickness of 25 µm, manufactured by Mitsubishi Chemical Corporation).

Next, each of the substrates of Examples and Comparative Examples was attached to an SUS plate having a thickness of 0.4 mm via a double-sided tape No. 5000NS (manufactured by NITTO DENKO CORPORATION) using a rubber roller. Thereafter, the release sheet of the substrate was peeled.

Separately, the diluent of the pressure-sensitive adhesive composition was coated onto one surface in the thickness direction of a sheet (no release treatment) made of a backing substrate for adhesion evaluation of the pressure-sensitive adhesive composition (Lumirror S10 (polyethylene terephthalate, thickness of 25 µm, manufactured by Toray Industries, Inc.) using an applicator (manufactured by TESTER SANGYO CO., LTD.), thereby obtaining a coating film. Thereafter, the coating film was heated at 60°C for 5 minutes and then, at 100°C for 5 minutes to be dried. Thus, a pressure-sensitive adhesive layer (thickness of 50 µm) was obtained, and a pressure-sensitive adhesive sheet was produced. Thereafter, a release sheet (DIAFOII, MRF25, polyethylene terephthalate, thickness of 25 µm, manufactured by Mitsubishi Chemical Corporation) was attached onto one surface in the thickness direction of the pressure-sensitive adhesive layer using a rubber roller. Thereafter, the obtained sheet was cut into a width of 20 mm and a length of 80 mm to be compressively bonded at 100°C for 1 min at 0.5 MPa. Thereafter, the release sheet on the other surface in the thickness direction of the pressure-sensitive adhesive layer of the pressure-sensitive adhesive sheet was peeled.

Next, the substrate and the pressure-sensitive adhesive layer were attached to each other by compressive bonding with one reciprocation of a 2-kg roller.

Then, 180-degree peeling force (N/20 mm) after 30 minutes from the attachment was evaluated as adhesive force (N/20 mm). A precision universal testing machine Autograph AG-IS (manufactured by Shimadzu Corporation) was used for the adhesion test, and the test was carried out under the conditions of a tensile rate of 300 mm/min, room temperature of 23°C, and humidity of 50%. The results of these are shown in Tables 1 to 13.

### [Table 1]

**Table 1**

| Ex. - Comp. Ex. No. | | | | Ex. 1 | Ex. 2 | Ex. 3 | Ex. 4 | Comp. Ex. 1 |
|---|---|---|---|---|---|---|---|---|
| Substrate | First β-1,3-glucan Derivative | First β-1,3-glucan Derivative of Synthesis Ex. 1 (parts by mass) | | 100 | 100 | 100 | 100 | 100 |
| | | Number of Carbon Atoms of R in RCO (Acyl Group) | | 3 | 3 | 3 | 3 | 3 |
| | Resin (parts by mass) | Rosin-Based Resin | PENSEL D-125 | 30 | | | | |
| | | | PINECRYSTAL KR-50M | | | | 30 | |
| | | Terpene-Based Resin | YS POLYSTER 130 | | | 30 | | |
| | | Petroleum-Based Resin | ARKON P-125 | | 30 | | | |
| | Number of Parts by Mass of Resin to 100 Parts by Mass of First β-1,3-glucan Derivative (parts by mass) | | | 30 | 30 | 30 | 30 | 0 |
| Pressure-Sensitive Adhesive Laver | Pressure-Sensitive Adhesive Composition | Second β-1,3-glucan Derivative (parts by mass) | Second β-1,3-glucan Derivative of Synthesis Ex. 4 | Excellent | Excellent | Excellent | Excellent | Excellent |
| Evaluation | Adhesive Force (N/20mm) | | | 2.52 | 0.9 | 1.61 | 2.57 | 0.72 |

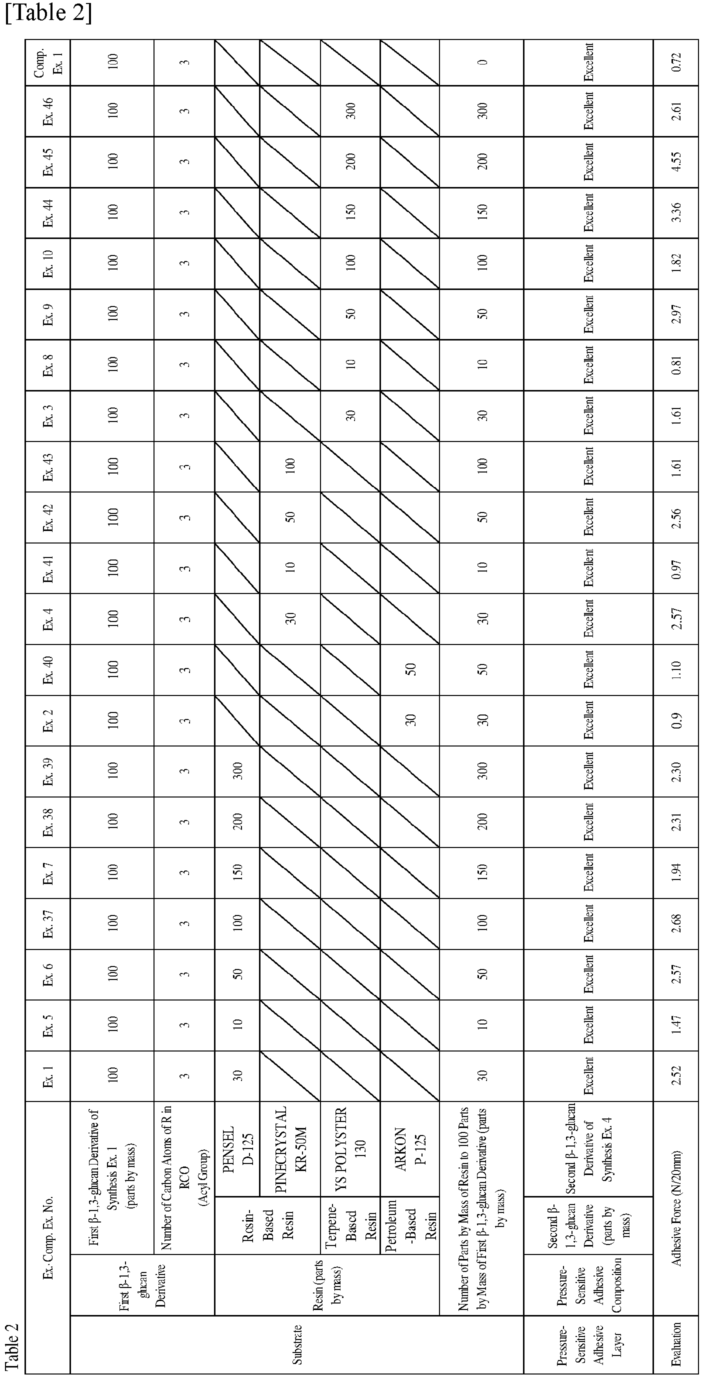

### [Table 3]

**Table 3**

| Ex.·Comp. Ex. No. | | | | Ex. 1 | Ex. 3 | Comp. Ex. 1 | Ex. 11 | Ex. 12 | Comp. Ex. 2 |
|---|---|---|---|---|---|---|---|---|---|
| Substrate | First p-1,3-glucan Derivative | First p-1,3-glucanDerivative of Synthesis Ex. 1 (parts by mass) | | 100 | 100 | 100 | | | |
| | | First β-1,3-glucan Derivative of Synthesis Ex. 2 (parts by mass) | | | | | 100 | 100 | 100 |
| | | Number of Carbon Atoms of R in RCO (Acyl Group) | | 3 | 3 | 3 | 2 | 2 | 2 |
| | Resin (parts by mass) | Rosin-Based Resin | PENSEL D-125 | 30 | | | 30 | | |
| | | | PINECRYSTAL KR-50M | | | | | | |
| | | Terpene-Based Resin | YS POLYSTER 130 | | 30 | | | 30 | |
| | | Petroleum-Based Resin | ARKON P-125 | | | | | | |
| | Number of Parts by Mass of Resin to 100 Parts by Mass of First β-1,3-glucan Derivative (parts by mass) | | | 30 | 30 | 0 | 30 | 30 | 0 |
| Pressure-Sensitive Adhesive Layer | Pressure-Sensitive Adhesive Composition | Second β-1,3-glucan Derivative (parts by mass) | Second β-1,3-glucan Derivative of Synthesis Ex. 4 | Excellent | Excellent | Excellent | Excellent | Excellent | Excellent |
| Evaluation | Adhesive Force (N/20mm) | | | 2.52 | 1.61 | 0.72 | 0.85 | 1.11 | 0.08 |

### [Table 4]

**Table 4**

| Ex.-Comp. Ex. No. | | | | Ex. 13 | Ex. 14 | Ex. 15 | Ex. 16 | Comp. Ex. 3 | Ex. 17 | Comp. Ex. 4 |
|---|---|---|---|---|---|---|---|---|---|---|
| Substrate | First β-1,3-glucan Derivative | First β-1,3-glucan Derivative of Synthesis Ex. 1 (parts by mass) | | 100 | 100 | 100 | 100 | 100 | | |
| | | First β-1,3-glucan Derivative of Synthesis Ex. 3 (parts by mass) | | | | | | | 100 | 100 |
| | | Number of Carbon Atoms of R in RCO (Acyl Group) | | 3 | 3 | 3 | 3 | 3 | 5 | 5 |
| | Resin (parts by mass) | Rosin-Based Resin | PENSEL D-125 | 30 | | | | | 30 | |
| | | | PINECRYSTAL KR-50M | | | | 30 | | | |
| | | Terpene-Based Resin | YS POLYSTER 130 | | | 30 | | | | |
| | | Petroleum -Based Resin | ARKON P-125 | | 30 | | | | | |
| | Number of Parts by Mass of Resin to 100 Parts by Mass of First β -1,3-glucan Derivative (parts by mass) | | | 30 | 30 | 30 | 30 | 0 | 30 | 0 |
| Pressure-Sensitive Adhesive Layer | Pressure-Sensitive Adhesive Composition | Natural Rubber-Based Pressure-Sensitive Adhesive of Preparation Ex. 1 | | Excellent | Excellent | Excellent | Excellent | Excellent | Excellent | Excellent |
| Evaluation | Adhesive Force (N/20mm) | | | 2.08 | 2.74 | 1.2 | 1.22 | 0.45 | 0.88 | 0.61 |

### [Table 5]

**Table 5**

| Ex.·Comp. Ex. No. | | | | Ex. 18 | Ex. 19 | Ex. 20 | Ex. 21 | Comp. Ex. 5 |
|---|---|---|---|---|---|---|---|---|
| Substrate | First β-1,3-glucan Derivative | First β-1,3-glucan Derivative of Synthesis Ex. 1 (parts by mass) | | 100 | 100 | 100 | 100 | 100 |
| | | Number of Carbon Atoms of R in RCO (Acyl Group) | | 3 | 3 | 3 | 3 | 3 |
| | Resin (parts by mass) | Rosin-Based Resin | PENSEL D-125 | 30 | | | | |
| | | | PINECRYSTAL KR-50M | | | | 30 | |
| | | Terpene-Based Resin | YS POLYSTER 130 | | | 30 | | |
| | | Petroleum-Based Resin | ARKON P-125 | | 30 | | | |
| | Number of Parts by Mass of Resin to 100 Parts by Mass of First β -1,3-glucan Derivative (parts by mass) | | | 30 | 30 | 30 | 30 | 0 |
| Pressure-Sensitive Adhesive Layer | Pressure-Sensitive Adhesive Composition | Polyester-Based Pressure-Sensitive Adhesive of Preparation Ex. 2 | | Excellent | Excellent | Excellent | Excellent | Excellent |
| Evaluation | Adhesive Force (N/20mm) | | | 6.17 | 3.74 | 5.81 | 6.38 | 3.11 |

### [Table 6]

**Table 6**

| Ex.·Comp. Ex. No. | | | | Ex. 22 | Ex. 23 | Ex. 24 | Comp. Ex. 6 |
|---|---|---|---|---|---|---|---|
| Substrate | First P-1,3-glucan Derivative | First β-1,3-glucan Derivative of Synthesis Ex. 1 (parts by mass) | | 100 | 100 | 100 | 100 |
| | | Number of Carbon Atoms of R in RCO (Acyl Group) | | 3 | 3 | 3 | 3 |
| | Resin (parts by mass) | Rosin-Based Resin | PENSEL D-125 | 30 | | | |
| | | | PINECRYSTAL KR-50M | | | | |
| | | Terpene-Based Resin | YS POLYSTER 130 | | | 30 | |
| | | Petroleum-Based Resin | ARKON P-125 | | 30 | | |
| | Number of Parts by Mass of Resin to 100 Parts by Mass of First β-1,3-glucan Derivative (parts by mass) | | | 30 | 30 | 30 | 0 |
| Pressure-Sensitive Adhesive Layer | Silicone-Based Pressure-Sensitive Adhesive Tape No.360UL | | | Excellent | Excellent | Excellent | Excellent |
| Evaluation | Adhesive Force (N/20mm) | | | 3.65 | 5.24 | 5.21 | 3.24 |

### [Table 7]

**Table 7**

| Ex.·Comp. Ex. No. | | | | Ex. 25 | Ex. 26 | Ex. 27 | Ex. 28 | Comp. Ex. 7 |
|---|---|---|---|---|---|---|---|---|
| Substrate | First P-1,3-glucan Derivative | First β-1,3-glucan Derivative of Synthesis Ex. 1 (parts by mass) | | 100 | 100 | 100 | 100 | 100 |
| | | Number of Carbon Atoms of R in RCO (Acyl Group) | | 3 | 3 | 3 | 3 | 3 |
| | Resin (parts by mass) | Rosin-Based Resin | PENSEL D-125 | 30 | | | | |
| | | | PINECRYSTAL KR-50M | | | | 30 | |
| | | Terpene-Based Resin | YS POLYSTER 130 | | | 30 | | |
| | | Petroleum-Based Resin | ARKON P-125 | | 30 | | | |
| | Number of Parts by Mass of Resin to 100 Parts by Mass of First β-1,3-glucan Derivative (parts by mass) | | | 30 | 30 | 30 | 30 | 0 |
| Pressure-Sensitive Adhesive Layer | Pressure-Sensitive Adhesive Composition | Acrylic Pressure-Sensitive Adhesive of Preparation Ex. 3 | | Excellent | Excellent | Excellent | Excellent | Excellent |
| Evaluation | Adhesive Force (N/20mm) | | | 0.12 | 0.11 | 0.15 | 0.42 | 0.10 |

### [Table 8]

**Table 8**

| Ex.·Comp. Ex. No. | | | | Ex.. 29 | Ex.. 30 | Ex.. 31 | Ex.. 32 | Comp. Ex. 8 |
|---|---|---|---|---|---|---|---|---|
| Substrate | First β-1,3-glucan Derivative | First β-1,3-glucan Derivative of Synthesis Ex. 1 (parts by mass) | | 100 | 100 | 100 | 100 | 100 |
| | | Number of Carbon Atoms of R in RCO (Acyl Group) | | 3 | 3 | 3 | 3 | 3 |
| | Resin (parts by mass) | Rosin-Based Resin | PENSEL D-125 | 30 | | | | |
| | | | PINECRYSTAL KR-50M | | | | 30 | |
| | | Terpene-Based Resin | YS POLYSTER 130 | | | 30 | | / |
| | | Petroleum-Based Resin | ARKON P-125 | | 30 | | | |
| | Number of Parts by Mass of Resin to 100 Parts by Mass of First β-1,3-glucan Derivative (parts by mass) | | | 30 | 30 | 30 | 30 | 0 |
| Pressure-Sensitive Adhesive Layer | Pressure-Sensitive Adhesive Composition | Second β-1,3-glucan Derivative (parts by mass) | Second β-1,3-glucan Derivative of Synthesis Ex. 5 | Excellent | Excellent | Excellent | Excellent | Excellent |
| Evaluation | Adhesive Force (N/20mm) | | | 1.04 | 0.61 | 0.59 | 0.50 | 0.18 |

### [Table 9]

**Table 9**

| Ex.·Comp. Ex. No. | | | | Ex. 33 | Ex. 34 | Ex. 35 | Ex. 36 | Comp. Ex. 9 |
|---|---|---|---|---|---|---|---|---|
| Substrate | First β-1,3-glucan Derivative | First β-1,3-glucan Derivative of Synthesis Ex. 1 (parts by mass) | | 100 | 100 | 100 | 100 | 100 |
| | | Number of Carbon Atoms of R in RCO (Acyl Group) | | 3 | 3 | 3 | 3 | 3 |
| | Resin (parts by mass) | Rosin-Based Resin | PENSEL D-125 | 30 | | | | |
| | | | PINECRYSTAL KR-50M | | | | 30 | |
| | | Terpene-Based Resin | YS POLYSTER 130 | | | 30 | | |
| | | Petroleum-Based Resin | ARKON P-125 | | 30 | | | |
| | Number of Parts by Mass of Resin to 100 Parts by Mass of First β-1,3-glucan Derivative (parts by mass) | | | 30 | 30 | 30 | 30 | 0 |
| Pressure-Sensitive Adhesive Layer | Pressure-Sensitive Adhesive Composition | Second β-1,3-glucan Derivative (parts by mass) | Second β-1,3-glucan Derivative of Synthesis Ex. 6 | Excellent | Excellent | Excellent | Excellent | Excellent |
| Evaluation | Adhesive Force (N/20mm) | | | 1.92 | 0.81 | 0.90 | 1.35 | 0.21 |

### [Table 10]

**Table 10**

| Ex.·Comp . Ex. No. | | | | Ex. 29 | Ex. 47 | Ex. 48 | Ex. 49 | Ex. 30 | Ex. 31 | Ex. 50 | Ex. 51 | Ex. 52 | Ex. 53 | Ex. 32 | Ex. 54 | Comp. Ex. 8 |
|---|---|---|---|---|---|---|---|---|---|---|---|---|---|---|---|---|
| Substrate | First β-1,3-glucan Derivative | First β-1,3-glucan Derivative of Synthesis Ex. 1 (parts by mass) | | 100 | 100 | 100 | 100 | 100 | 100 | 100 | 100 | 100 | 100 | 100 | 100 | 100 |
| | | Number of Carbon Atoms of R in RCO (Acyl Group) | | 3 | 3 | 3 | 3 | 3 | 3 | 3 | 3 | 3 | 3 | 3 | 3 | 3 |
| | Resin (parts by mass) | Rosin-Based Resin | PENSEL D-125 | 30 | 10 | 200 | 300 | | | | | | | | | |
| | | | PINECRYSTAL KR-50M | | | | | | | | | | | 30 | 10 | |
| | | Terpene-Based Resin | YS POLYSTER 130 | | | | | | 30 | 10 | 150 | 200 | 300 | | | |
| | | Petroleum-Based Resin | ARKON P-125 | | | | | 30 | | | | | | | | |
| | Number of Parts by Mass of Resin to 100 Parts by Mass of First β-1,3-glucan Derivative (parts by mass) | | | 30 | 10 | 200 | 300 | 30 | 30 | 10 | 150 | 200 | 300 | 30 | 10 | 0 |
| Pressure-Sensitive Adhesive Layer | Pressure-Sensitive Adhesive Composition | Second β-1,3-glucan Derivative (parts by mass) | Second β-1,3-glucan Derivative of Synthesis Ex. 5 | Excellent | Excellent | Excellent | Excellent | Excellent | Excellent | Excellent | Excellent | Excellent | Excellent | Excellent | Excellent | Excellent |
| Evaluation | Adhesive Force (N/20mm) | | | 1.04 | 0.54 | 1.33 | 1.44 | 0.61 | 0.59 | 0.43 | 0.89 | 0.80 | 1.71 | 0.50 | 0.46 | 0.18 |

### [Table 11]

**Table 11**

| Ex.-Comp. Ex. No. | | | | Ex. 33 | Ex. 55 | Ex. 56 | Ex. 57 | Ex. 34 | Ex. 35 | Ex. 58 | Ex. 59 | Ex. 60 | Ex. 61 | Ex. 36 | Ex. 62 | Comp. Ex. 9 |
|---|---|---|---|---|---|---|---|---|---|---|---|---|---|---|---|---|
| Substrate | First β-1,3-glucan Derivative | First β-1,3-glucan Derivative of Synthesis Ex. 1 (parts by mass) | | 100 | 100 | 100 | 100 | 100 | 100 | 100 | 100 | 100 | 100 | 100 | 100 | 100 |
| | | Number of Carbon Atoms of R in RCO (Acyl Group) | | 3 | 3 | 3 | 3 | 3 | 3 | 3 | 3 | 3 | 3 | 3 | 3 | 3 |
| | Resin (parts by mass) | Rosin-Based Resin | PENSEL D-125 | 30 | 10 | 200 | 300 | | | | | | | | | |
| | | | PINECRYSTAL KR-50M | | | | | | | | | | | 30 | 10 | |
| | | Terpene-Based Resin | YS POLYSTER 130 | | | | | | 30 | 10 | 150 | 200 | 300 | | | |
| | | Petroleum-Based Resin | ARKON P-125 | | | | | 30 | | | | | | | | |
| | Number of Parts by Mass of Resin to 100 Parts by Mass of First β-1,3-glucan Derivative (parts by mass) | | | 30 | 10 | 200 | 300 | 30 | 30 | 10 | 150 | 200 | 300 | 30 | 10 | 0 |
| Pressure-Sensitive Adhesive Layer | Pressure-Sensitive Adhesive Composition | Second β-1,3-glucan Derivative (parts by mass) | Second β-1,3-glucan Derivative of Synthesis Ex. 6 | Excellent | Excellent | Excellent | Excellent | Excellent | Excellent | Excellent | Excellent | Excellent | Excellent | Excellent | Excellent | Excellent |
| Evaluation | Adhesive Force (N/20mm) | | | 1.92 | 1.29 | 2.54 | 2.22 | 0.81 | 0.90 | 0.76 | 3.87 | 4.78 | 5.64 | 1.35 | 0.91 | 0.21 |

### [Table 12]

**Table 12**

| Ex.·Comp. Ex. No. | | | | Ex. 29 | Ex. 31 | Comp. Ex. 8 | Ex. 63 | Ex. 64 | Comp. Ex. 10 | Ex. 65 | Ex. 66 | Comp. Ex. 11 |
|---|---|---|---|---|---|---|---|---|---|---|---|---|
| Substrate | First β-1,3-glucan Derivative | First β-1,3-glucan Derivative of Synthesis Ex. 1 (parts by mass) | | 100 | 100 | 100 | | | | | | |
| | | First β-1,3-glucan Derivative of Synthesis Ex. 2 (parts by mass) | | | | | 100 | 100 | 100 | | | |
| | | First β-1,3-glucan Derivative of Synthesis Ex. 3 (parts by mass) | | | | | | | | 100 | 100 | 100 |
| | | Number of Carbon Atoms of R in RCO (Acyl Group) | | 3 | 3 | 3 | 2 | 2 | 2 | 5 | 5 | 5 |
| | Resin (parts by mass) | Rosin-Based Resin | PENSEL D-125 | 30 | | | 30 | | | 30 | | |
| | | | PINECRYSTAL KR-50M | | | | | | | | | |
| | | Terpene-Based Resin | YS POLYSTER 130 | | 30 | | | 30 | | | 30 | |
| | | Petroleum-Based Resin | ARKON P-125 | | | | | | | | | |
| | Number of Parts by Mass of Resin to 100 Parts by Mass of First β-1,3-glucan Derivative (parts by mass) | | | 30 | 30 | 0 | 30 | 30 | 0 | 30 | 30 | 0 |
| Pressure-Sensitive Adhesive Layer | Pressure-Sensitive Adhesive Composition | Second β-1,3-glucan Derivative (parts by mass) | Second β-1,3-glucan Derivative of Synthesis Ex. 5 | Excellent | Excellent | Excellent | Excellent | Excellent | Excellent | Excellent | Excellent | Excellent |
| Evaluation | Adhesive Force (N/20mm) | | | 1.04 | 0.59 | 0.18 | 0.90 | 0.85 | 0.09 | 0.85 | 1.02 | 0.66 |

### [Table 13]

**Table 13**

| Ex.·Comp. Ex. No. | | | | Ex. 33 | Ex. 35 | Comp. Ex. 9 | Ex. 67 | Ex. 68 | Comp. Ex. 12 | Ex. 69 | Ex. 70 | Comp. Ex. 13 |
|---|---|---|---|---|---|---|---|---|---|---|---|---|
| Substrate | First β-1,3-glucan Derivative | First β-1,3-glucan Derivative of Synthesis Ex. 1 (parts by mass) | | 100 | 100 | 100 | | | | | | |
| | | First β-1,3-glucan Derivative of Synthesis Ex. 2 (parts by mass) | | | | | 100 | 100 | 100 | | | |
| | | First β-1,3-glucan Derivative of Synthesis Ex. 3 (parts by mass) | | | | | | | | 100 | 100 | 100 |
| | | Number of Carbon Atoms of R in RCO (Acyl Group) | | 3 | 3 | 3 | 2 | 2 | 2 | 5 | 5 | 5 |
| | Resin (parts by mass) | Rosin-Based Resin | PENSEL D-125 | 30 | | | 30 | | | 30 | | |
| | | | PINECRYSTAL KR-50M | | | | | | | | | |
| | | Terpene-Based Resin | YS POLYSTER 130 | | 30 | | | 30 | | | 30 | |
| | | Petroleum-Based Resin | ARKON P-125 | | | | | | | | | |
| | Number of Parts by Mass of Resin to 100 Parts by Mass of First β-1,3-glucan Derivative (parts by mass) | | | 30 | 30 | 0 | 30 | 30 | 0 | 30 | 30 | 0 |
| Pressure-Sensitive Adhesive Layer | Pressure-Sensitive Adhesive Composition | Second β-1,3-glucan Derivative (parts by mass) | Second β-1,3-glucan Derivative of Synthesis Ex. 6 | Excellent | Excellent | Excellent | Excellent | Excellent | Excellent | Excellent | Excellent | Excellent |
| Evaluation | Adhesive Force (N/20mm) | | | 1.92 | 0.90 | 0.21 | 1.30 | 1.44 | 0.09 | 0.51 | 0.47 | 0.09 |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The pressure-sensitive adhesive sheet of the present invention is preferably used for surface protection applications and connection applications, or as a process material.

### Description of Reference Numerals

- 1: Pressure-sensitive adhesive sheet
- 2: Substrate
- 3: Pressure-sensitive adhesive layer

## Claims

1. A pressure-sensitive adhesive sheet comprising:
a substrate and a pressure-sensitive adhesive layer in order toward one side in a thickness direction, wherein
the substrate contains
a first β-1,3-glucan derivative obtained by introducing an acyl group into a β-1,3-glucan and
at least one resin selected from the group consisting of a rosin-based resin, a terpene-based resin, and a petroleum-based resin; and
in the first β-1,3-glucan derivative, the acyl group is represented by R¹CO-, and the R¹ is a hydrocarbon group having 1 or more and 5 or less carbon atoms.

2. The pressure-sensitive adhesive sheet according to claim 1, wherein
the pressure-sensitive adhesive layer contains a biomass-derived component.

3. The pressure-sensitive adhesive sheet according to claim 2, wherein
the biomass-derived component contains a second β-1,3-glucan derivative obtained by introducing an acyl group into a β-1,3-glucan; and
in the second β-1,3-glucan derivative, the acyl group is represented by R²CO-, and the R² is a hydrocarbon group having 7 or more and 15 or less carbon atoms.

4. The pressure-sensitive adhesive sheet according to claim 2, wherein
the biomass-derived component contains a natural rubber-based pressure-sensitive adhesive.

5. The pressure-sensitive adhesive sheet according to any one of claims 1 to 4, wherein
a content ratio of the resin with respect to 100 parts by mass of the first β-1,3-glucan derivative is 10 parts by mass or more and 300 parts by mass or less.
